# EUROPEAN PATENT APPLICATION

(11) **EP 0 893 235 A2**
(43) Date of publication of application: **27.01.1999**
(21) Application number: 98202333.5
(22) Date of filing: 10.07.1998
(51) Int. Cl.: B29C 70/44, B29D 9/00

(54) **Method for the production of a plastic laminate**

(30) Priority: 11.07.1997 NL 1006566
(71) Applicant: Fokker Special Products B.V., 7900 AB Hoogeveen (NL)
(72) Inventor: Teunissen, Johannes Martinus, 7900 AC Hoogeveen (NL); Offringa, Arnt Rinse, 7908 AT Hoogeveen (NL)
(74) Representative: de Bruijn, Leendert C.

(57) **Abstract**

A method for the production of products from a thermoplastic matrix laminate comprises the following steps:
- providing at least one layer of fibre material,
- placing a thermoplastic matrix material on the fibre material,
- packing the pack of fibre material and matrix material in a casing,
- lowering the pressure in the casing,
- heating the fibre material and matrix material such that the fibre material is impregnated with said matrix material whilst maintaining the low pressure,
- cooling fibre material and matrix material with the formation of a laminate.

## Description

The invention relates to the field of the production of plastic laminates, such as panels, shaped products and the like. In particular, it relates to laminates composed of layers of fibre material and a thermoplastic matrix. For these laminates the thermoplastic matrix is melted such that the fibre material is impregnated. After cooling, a rigid product is obtained which has specific characteristics in respect of rigidity and strength depending on the orientation of the fibre layers, the number of fibre layers, the nature of the fibres and the like.

EP-B 396456 discloses a method with which a stack of such materials is brought to the desired temperature in a vacuum chamber. The stack is compressed firmly between two pressure plates in said vacuum chamber, such that any air and gases are driven out of the stack by the combined effect of vacuum and pressure.

After the stack has been brought to the desired temperature in this way, it is transferred to a moulding press in which the stack is pressed into the desired shape to produce the final laminate product.

This known method is fairly expensive in view of the fact that a moulding press has to be available for each product of a different shape. The necessary moulds are expensive, which means that this method is less flexible.

Methods in which the layers are packed in an airtight casing have also been disclosed. A pressure difference is generated over the casing, which difference presses the layers firmly onto one another. These methods can be carried out either in an autoclave or in a furnace, the pressure difference having to remain limited in the latter since it cannot exceed atmospheric pressure.

These known methods make use of thermosetting matrix materials. The fibre material is first impregnated with such a matrix material, for example by means of coating. The fibre layers are then pressed onto one another by applying the pressure difference, after which the matrix is set by heating. However, there is a trend towards the use of thermoplastic matrix materials instead of such thermosetting matrix materials. Such thermoplastics are not only less expensive and easier to produce, they are also better able to resist fire and are easy to reprocess.

The aim of the invention is, therefore, to provide a method which is suitable for thermoplastic matrix materials.

Said aim is achieved by means of a method for the production of products from a thermoplastic matrix laminate, comprising the following steps:
- providing a pack of at least one layer of fibre material and a thermoplastic matrix material,
- placing the pack of fibre material and matrix material between two walls in contact with said pack,
- lowering the pressure in the casing defined by said walls,
- heating the fibre material and matrix material such that the fibre material is impregnated with the latter whilst maintaining the low pressure,
- cooling fibre material and matrix material with the formation of a laminate.

In particular, the method can comprise the step of packing the pack of fibre material and matrix material in a casing.

Air is present in the fibre material. Evolution of gas also occurs during heating of the matrix material and the fibre material. Consequently, gas inclusions could be formed. Such gas inclusions, however, constitute a weakening of the final laminate and their formation must therefore be prevented as far as possible. This can be achieved with the method according to the invention by removing gases from the casing. In particular, the gases can be drawn off from both sides of the pack, such that a homogeneous cross-section of the laminate which is free from gas inclusions can be obtained.

The embedding of the fibres in the matrix material (consolidation) is highly dependent on temperature and pressure. At high pressures even relatively viscous matrix materials can be forced into the spaces between the fibres. With the method according to the invention, however, the contact pressures are low (< 1 bar) and correct embedding of the fibre material in the matrix would therefore not always be guaranteed.

According to a further embodiment of the method, which makes correct embedding of the fibre material possible even with low contact pressures, polyphenylene sulphide (PPS) is chosen as the thermoplastic matrix material. At certain temperatures this material has such a low viscosity that wetting of the fibres proceeds well even under a low contact pressure.

The advantage of this is that the method according to the invention is outstandingly suitable for use in a furnace. It is not necessary to use an autoclave, which means that the investment required for carrying out the method according to the invention can remain restricted.

Embedding of the fibres in the PPS matrix material (consolidation) can be carried out at a temperature of between 280 °C and 350 °C. Preferably, a temperature of ≤ 315 °C is used, such that gas formation is avoided.

The reduced pressures used for consolidation are at most 0.70 bar absolute and preferably 0.05 bar absolute.

In order reliably to remove any air and gases, the pack can be accommodated between an upper and a lower ventilation layer.

A porous hose-shaped element can also be fitted around the periphery of the pack.

The pack with the layers on the top and bottom thereof can then be placed on a moulding table and covered with a gastight film, which is then sealed with respect to the moulding table.

With the method according to the invention the pack of fibre material can be placed on a curved mould in order to produce curved products.

The method also comprises the variant of applying a polyimide-material to the pack of fibre material and matrix material and then applying the release layer. After forming the product, the release layer and the polyimide material may be removed.

The advantage of the product produced in this way is that it is still possible to apply a weld at the location of the polyimide-material.

The invention will be explained in more detail below with reference to the illustrative embodiments shown in the figures.
Figure 1 shows a first illustrative application of the method according to the invention.
Figure 2 shows the pack to be used in the method.
Figure 3 shows a second illustrative application.

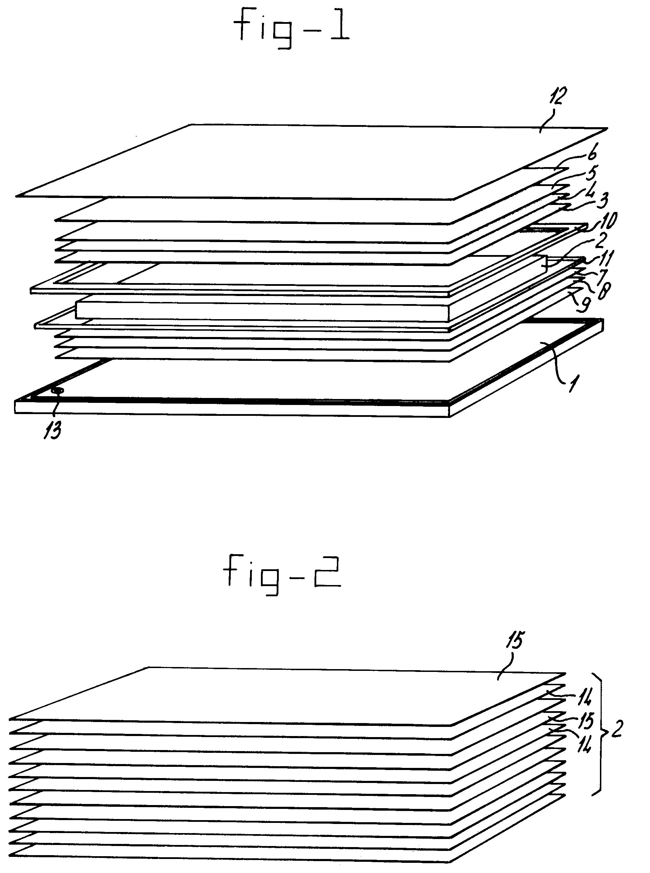

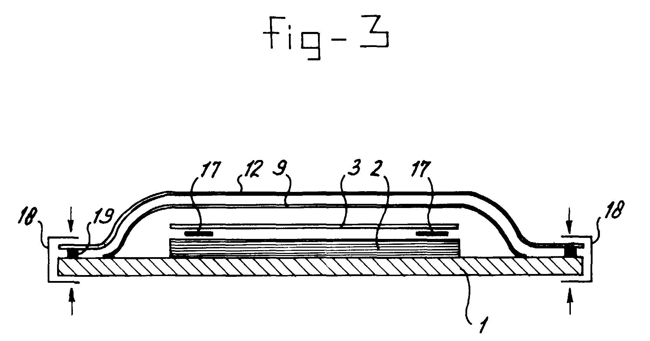

Figure 1 shows a moulding table 1, on which the pack, which is indicated in its entirety by 2, has to be placed. Said pack 2 consists of a number of sheets of fibre material and polyphenylene sulphide film, as will be explained with reference to Figure 2.

A tear fabric 3, glass cloth 4, perforated film 5 and ventilation fabric 6 are placed successively on the top of the pack 2.

A tear fabric 7, a glass cloth 8 and a ventilation fabric 9 are also placed on the bottom of the pack 2.

A ventilation cloth 10 and a perforated hose 11 are fitted around the pack 2, after which the entire pack comprising layers 2-9 and the annular elements 10, 11 is placed on the moulding table 1 and covered with a gastight film 12. The film 12 is sealed at the periphery with respect to the moulding table 1, for example using adhesive tape.

The moulding table 1 has a connector 13 to which a vacuum source (not shown) can be connected, such that a vacuum of, for example, 0.30 bar absolute can be generated in the space between moulding table 1 and film 12.

By virtue of the presence of the ventilation fabrics on the top and bottom of the pack 2 and of the perforated annular elements 10 and 11, gases and any air that were still present in the pack 2 and which are produced on heating the latter can be reliably removed.

After heating and cooling, a matrix laminate is then obtained, the fibre layers of which have been reliably impregnated with the matrix material polyphenylene sulphide, without air or gas inclusions.

As is shown in Figure 2, the pack consists of woven sheets of carbon fibres 14, which are each enclosed on both sides by polyphenylene sulphide films 15, 16. Depending on the desired thickness of the final laminate and the desired strength and rigidity, a larger or smaller number of layers of fibre material 14 with specific orientations can be applied.

Although the figures show the production of a flat product, the method according to the invention is outstandingly suitable for curved products such as skins for wing panels. With this method it is also possible to fit desired reinforcements in the form of additional strips and the like in certain positions. Curved and irregular shapes of this type can be held in good contact with the mould under the effect of the vacuum. The method according to the invention can consequently be used very flexibly and for diverse products.

In the illustrative embodiment shown in Figure 3 the pack 2 has been placed on a mould 1. Two strips 17 of polyamide material have been placed on the pack 2 and a release layer or tear fabric 3 has been placed on top of these.

The ventilation fabric 9 and gastight film 12 layers are then placed on top. The gastight film is covered with respect to the seal 19. The mould 1, the seal 19 and the gastight film 12 are pressed firmly onto one another by means of clamps 18. The ventilation fabric, e.g. from glass fibres, ensures a smooth application and compression on the pack 2.

The product produced according to the illustrative embodiment in Figure 3 consists of the pack 2, the strips of polyamide material 17 and the adhering release layer 3. The release layer 3 is removed for further processing of this product. Upon removing said layer, usually a somewhat polluted surface remains. At the location of the (removed) strips of polyamide material the surface is clean, which means that a weld can be produced there.

A release layer 20 from polyimide or a wax-like material may also be applied between pack 2 and moulding table 1.

## Claims

1. Method for the production of products from a thermoplastic matrix laminate, comprising the following steps:
- providing a pack of at least one layer of fibre material and a thermoplastic matrix material,
- placing the pack of fibre material and matrix material between two walls in contact with said pack,
- lowering the pressure in the casing defined by said walls,
- heating the fibre material and matrix material such that the fibre material is impregnated with the latter whilst maintaining the low pressure,
- cooling fibre material and matrix material with the formation of a laminate.

2. Method according to Claim 1, comprising packing the pack of fibre material and matrix material in a casing.

3. Method according to Claim 1 or 2, comprising the step of removing gases from the casing.

4. Method according to Claim 3, comprising drawing off gases from both sides of the pack.

5. Method according to one of the preceding claims, wherein the thermoplastic matrix material is polyphenylene sulphide (PPS).

6. Method according to Claim 5, comprising the step of consolidating the pack at a temperature of between 280 °C and 350 °C.

7. Method according to Claim 5, comprising consolidation of the pack at a temperature lower than 335 °C.

8. Method according to Claim 6 or 7, comprising consolidation of the pack at a temperature between 300 °C and 325 °C.

9. Method according to Claim 6, 7 or 8, comprising consolidation of the pack at a temperature between 310 °C and 315 °C.

10. Method according to Claim 6, 7, 8 or 9, comprising consolidation of the pack at a temperature lower than 315 °C.

11. Method according to one of the preceding claims, comprising consolidation of the pack under a vacuum of at most 0.70 bar absolute.

12. Method according to Claim 11, comprising consolidation of the pack under a vacuum of 0.30 bar absolute.

13. Method according to one of the preceding claims, comprising incorporating the pack between a top and a bottom ventilation layer.

14. Method according to one of the preceding claims, comprising placing the pack on a porous mould.

15. Method according to one of the preceding claims, comprising placing the pack on a curved mould.

16. Method according to Claim 13, 14 or 15, comprising placing a release layer, such as a tear fabric, between each ventilation layer and the pack.

17. Method according to Claim 16, comprising placing a polyimide material on the pack of fibre material and matrix material and then applying the release layer.

18. Method according to one of the preceding claims, comprising fitting a porous hose-shaped element around at least part of the periphery of the pack.

19. Method according to one of the preceding claims, comprising placing the pack with the layers on the top and bottom thereof on a moulding table, covering said pack with an essentially gastight film and sealing the film with respect to the moulding table.

20. Method according to one of the preceding claims, comprising:
- preheating a furnace to the temperature required for consolidation,
- preparing a mould with a pack of fibre material and matrix material and other layers in advance outside the furnace,
- introducing the mould with pack and other layers directly into the preheated furnace.

21. Method according to one of the preceding claims, comprising the use of a metal mould having a thickness of approximately 3 mm.

22. Method according to one of the preceding claims, comprising the use of a mould made of steel or nickel.

23. Method according to one of claims 19-22, comprising applying a release layer from polyimide between the pack and the moulding table.

24. Method according to one of claims 19-22, comprising applying a release layer from a wax-like material between the pack and the moulding table.

25. Curved product obtained according to the method described in one of the preceding claims.
